# EUROPEAN PATENT SPECIFICATION

(11) **EP 2 409 305 B1**
(45) Date of publication and mention of the grant of the patent: **09.01.2013**
(21) Application number: 10716118.4
(22) Date of filing: 16.03.2010
(51) Int. Cl.: H01C 7/13

(54) **RESISTOR DEVICE, METHOD FOR PROVIDING THE SAME AND LOAD DISTRIBUTION SYSTEM**
WIDERSTANDSBAUELEMENT, VERFAHREN ZU SEINER HERSTELLUNG UND LASTVERTEILUNGSSYSTEM
DISPOSITIF À RÉSISTANCE, SA MÉTHODE DE FABRICATION ET SYSTÈME DE DISTRIBUTION DE CHARGE

(30) Priority: 17.03.2009 GB 0904586; 17.03.2009 US 160724 P
(43) Date of publication of application: 25.01.2012
(73) Proprietor: Eltek AS, 3003 Drammen (NO)
(72) Inventor: LESKINEN, Jorma, SE-13738 Västerhaninge (SE); STEINSTAD, Arne, N-0689 Oslo (NO)
(74) Representative: Onsagers AS
(86) International application number: PCT/NO2010/000099
(87) International publication number: WO 2010/107321

(56) References cited:
- EP-A1- 1 523 015
- GB-A- 1 534 553
- GB-A- 2 064 225

## Description

### FIELD OF THE INVENTION

The present invention relates to a resistor device connected between a miniature circuit breaker (MCB) and a bus bar. The invention also relates to a method for providing such a resistor device and a load distribution system, comprising said resistor device.

### BACKGROUND

Continuous operation is a critical requirement for power supply systems supplying electrical power to loads, such as industrial equipment, telecommunication equipment, broadband, cable TV, internet equipment etc. However, failures such as human errors due to maintenance, component failures etc may occur, which may cause a short-circuit current to ground, which again may cause increased downtime and also damage to electrical components.

Therefore, a resistor is usually connected between miniature circuit breakers (MCB) and the load or between the MCB and a power supply bus bar to reduce such short-circuits currents. Such resistors are in -48V telecom systems usually designed for currents up to maximum 15A, and comprise coiled resistance wires. However, such wire resistors will be subjected to excessive internal heating and may even burn off and cause fire hazard if the current is increased to for example 30A, which may also be a desired design parameter. Consequently, several such wire resistors must be connected in a parallel/series combination to meet this requirement in order to withstand the heat dissipation.

It should be noted that the available space for the wire resistors is very limited. Each MCB has typically a width of less than 15mm, and there is typically a space available for creating distance up to ca 100 mm between the MCBs and a bus bar for -48V voltage distribution in the system. Consequently, the combination of the wire resistors must fit in this available space.

Moreover, heat dissipation also influences the design of the wire resistors, since the plastic cover of the MCB will be damaged if its temperature exceeds ca 100°C. Moreover, the resistance of the above wire resistor is varying depending on the temperature.

EP 1523015 describes a method for making a plurality of surface mount resistors. The method comprises taking a ribbon comprising an elongated resistive strip, an elongated first metallic strip and an elongated second metallic strip, where the resistive strip being made of a resistive material and the first and second metallic strips being made of a metallic material that is different from the resistive material. A plurality of cuts are made in a direction transverse to the longitudinal axis of the resistive strip.

GB 1534553 describes an adaptor by which an electrical miniature circuit breaker of the type having a single pocket formed in its outer casing for receiving a mounting projection is mountable on a DIN rail. The adaptor is comprising a body having a pair of opposed faces one of which has a flange extending outwardly there from with at least one projection extending from the flange in a direction substantially parallel to said face. Each projection is serving to form a mounting projection for a circuit breaker. Means are provided on the other face of the body by which the body is securable to a DIN rail.

GB 2064255 describes a mounting assembly for electrical devices designed for DIN-rail mounting consists of a mounting plate formed with a strip lying in the plane of the plate and having a free edge lying parallel to a bus- bar or bus-bars. Each electrical device such as a miniature circuit- breaker is held in place by having its catch engage behind the edge and by the attachment of its terminal in a slot of the bus-bar.

The object of the invention is to provide a resistor device which fits in the abovementioned space, which does not break when heated/when carrying large currents, and which has a relatively constant resistance at different temperatures. Moreover, the resistor device should provide the possibility to draw an even larger current from each MCB, for example 40A.

### SUMMARY OF THE INVENTION

The above object of the invention is achieved by means of a resistor device connected between a miniature circuit breaker and a bus bar, comprising:
- an miniature circuit breaker connector connected to the miniature circuit breaker;
- a bus bar connector connected to the bus bar;
   characterized in that the resistor device comprises:
- a body fixed to the miniature circuit breaker connector and the bus bar connector, where the body comprises a sheet of a metallic resistive material;
where the body comprises at least one notch having a first end opening towards the periphery of the body and a second end provided substantially in a central area of the body; where the at least one notch defines a current flow line between the miniature circuit breaker connector and the bus bar connector, and where the total resistance between the miniature circuit breaker connector and the bus bar connector is approximately 20 - 40 mΩ.

The central area may be defined to have the same shape as the body and has an area less than 30% of the area of the body.

The centre of the central area may coincide with the centre of the body.

The metallic material of the body may have a low thermal conductivity.

The body may be substantially rectangular.

The metallic material may be made of titanium, titanium alloy, or stainless steel.

The body may be mounted vertically between the miniature circuit breaker and the bus bar.

The miniature circuit breaker connector and the bus bar connector may be made of a material with resistance substantially equal to zero.

The second end of the notch may comprise a substantially circular recess.

The notch may comprise branches.

The body may have a thickness less than 1.2 mm.

The miniature circuit breaker connector may comprise a cooling element.

The invention also relates to a method for providing a resistor device connected between a miniature circuit breaker and a bus bar, comprising the following steps:
- cutting a body of a sheet of metallic resistive material;
- fixing an miniature circuit breaker connector to the body and connecting the miniature circuit breaker connector to the miniature circuit breaker;
- fixing a bus bar connector to the body and connecting the bus bar connector to the bus bar;
- cutting at least one notch into the body, where the at least one notch is having a first end opening towards the periphery of the body and a second end provided substantially in a central area of the body; where the at least one notch defines a current flow line between the miniature circuit breaker connector and the bus bar connector; and where the total resistance between the miniature circuit breaker connector and the bus bar connector is approximately 20 - 40 mΩ. The cutting may performed by water jet cutting or laser cutting.

Moreover, the invention also relates to a load distribution system comprising:
- a first bus bar providing a first voltage level;
- a second bus bar providing a second voltage level;
- miniature circuit breakers, each having a first terminal connected to the first bus bar via a resistor device as described above, and a second terminal connected to the second bus bar via a load, where bodies of the respective resistor devices are provided in parallel.

A cooling fan may be provided for blowing air past the resistor devices.

A mechanical support may be provided between each resistor device.

### DETAILED DESCRIPTION

Embodiments of the invention will now be described with reference to the enclosed drawings, where:
Fig. 1 describes a resistor device connected between a miniature circuit breaker (MCB) and a bus bar.
Fig. 2 illustrates the current flow line and the central area and other different dimensions of the body shown in fig. 1.
Fig. 3a-f illustrate embodiments of the body of the resistor device.
Fig. 4a-f illustrate the current flow line and the central area of the embodiments in fig. 3a-f respectively.
Fig. 5 illustrates a system comprising several MCBs and a bus bar, with resistor devices connected between the respective MCBs and the bus bar.
Fig. 6 is an image showing the temperature distribution of the resistor device during use.
Fig. 7 and 8 illustrates a load distribution system.
Fig. 9a and 9b illustrate embodiments of a mechanical support for the resistor devices in a load distribution system.

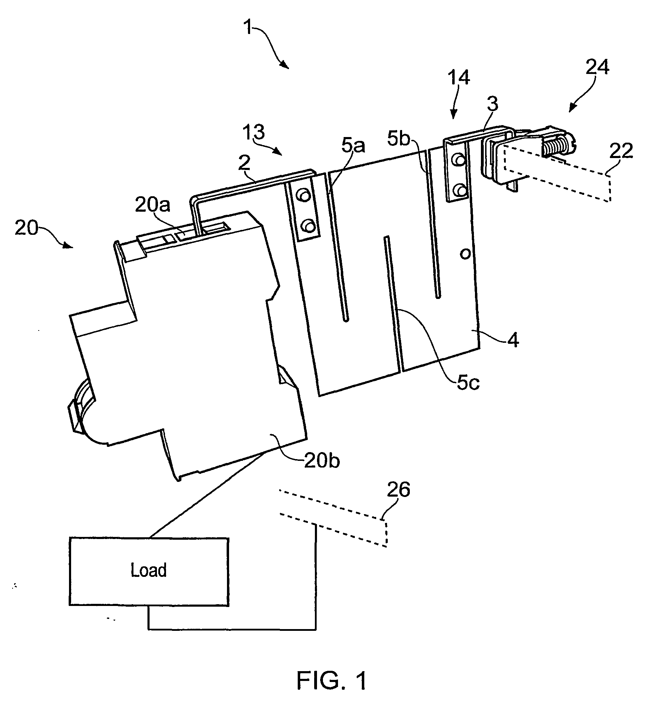

It is now referred to fig. 1. Here a resistor device generally denoted with reference number 1 is connected between a miniature circuit breaker (MCB) 20 and a bus bar 22.

The MCB 20 is known for a skilled person, and will not be described further in detail here. The MCB is usually mounted to a rail (not shown) in a switch cabinet (not shown) with a predetermined distance to the bus bar 22 representing the -48V voltage distribution. As mentioned in the introduction above, each MCB has typically a width of <15mm, and there is typically a distance of ca 100 mm between the MCB 20 and the bus bar 22.

The resistor device 1 comprises an MCB connector 2 for connection to the miniature circuit breaker 20. A first end of the MCB connector 2 may comprise a hook-shaped part adapted to be received in a first connection terminal 20a of the MCB 20. A second end of the MCB connector 2 is fixed to a first side 13 of a body 4 of the resistor device 1.

The MCB 20 further comprises a second connection terminal 20b for connection to a load. Hence, the load is connected between the second connection terminal 20b and a ground bus bar 26.

The resistor device 1 comprises a bus bar connector 3 for connection to the bus bar 22. A first end of the bus bar connector 3 may comprise a hook-shaped part adapted to be received in a connection device 24 for fixing the bus bar connector 3 to the bus bar 22. A second end of the bus bar connector 3 is fixed to a second side 14 of the body 4 of the resistor device 1.

The MCB connector 2, the bus bar connector 3 and the connection device 24 are providing a sufficient mechanical and electrical connection between the body 4 and the MCB 20 and bus bar 22 respectively. The MCB connector 2 and the bus bar connector 3 may be riveted, screwed, welded or fixed by other means to the body 4. The MCB connector 2 and the bus bar connector 3 may be made of a heat conducting and electrically conducting material, such as copper, or other metals with resistance substantially equal to zero.

Hence, the body 4 is fixed between the MCB connector 2 and the bus bar connector 3.

The body 4 comprises a sheet of a metallic resistive material. The metallic resistive material is here denoting a material which is electrically conducting, but which has resistive properties, i.e. it is having an electrical resistance R > 0 Ω. This will be explained in detail below.

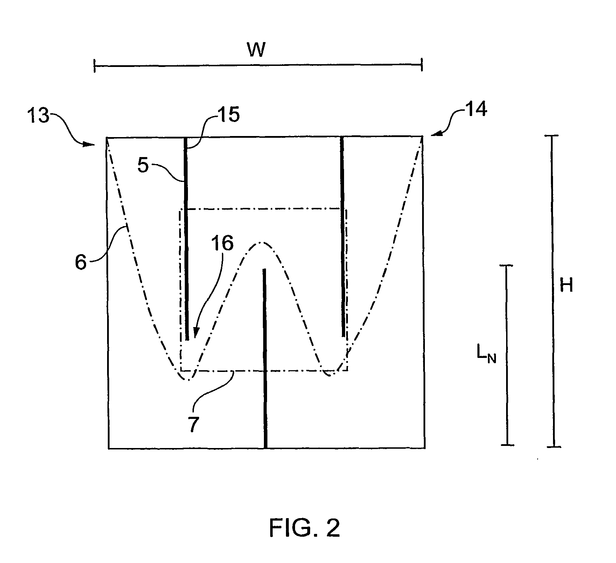

It is now referred to fig. 2. The body 4 of this embodiment is rectangular, with a width W of 100 mm and a height H of 110 mm. As explained more in detail below, several resistor devices may be mounted next to each other in a cabinet. Hence, the sheet should be relatively flat, with a thickness of less than 1.2 mm, to avoid any contact between adjacent resistor devices.

The body 4 comprises at least one notch, generally denoted with reference number 5. In the embodiment shown in fig. 2, there are three notches 5a, 5b and 5c. Each notch 5 has a first end 15 opening towards the periphery of the body 4 and a second end 16 provided substantially in a central area 7 of the body 4. Hence, the first end 15 is defining an opening at the periphery of the body 4. In this way, the notch 15 could be made in an easy way from the periphery of the body 4, for example by sawing, cutting, milling etc.

The central area 7 may be defined as having the same shape as the body 4 and having an area less than 30% of the area of the body 4. Moreover, the centre of the central area 7 coincides with the centre of the body 4.

The at least one notch 5 defines a current flow line 6 between the MCB connector (2) and the bus bar connector (3), i.e. between the first side 13 of the body 4 and the second side 14 of the body 4.

The metallic resistive material and the dimensions of the body 4 and notches 5 are chosen so that the total resistance between the MCB connector (2) and the bus bar connector (3) is approximately 20 - 40mQ, preferably 28-32mΩ. In the embodiment shown in fig. 2, the total resistance of the resistor device is 30mΩ.

The at least one notch 5 provides an increased current density in the central area (7) of the body (4), especially along the current flow line 6 in the central area 7 and the parts of the body 4 being near the second ends 16 of the at least one notch 5. Consequently, heat will be produced substantially in the central area 7 when the current through the resistor increases.

In addition, the metallic resistive material may have a low thermal conductivity. Consequently, the peripheral area of the body 4, i.e. the area of the body 4 that surrounds the central area 7, will work as a cooling area for the resistor device 1. In other words, the cooling area increases the surface area exposed to the surrounding air and contributes to the cooling of the resistor device.

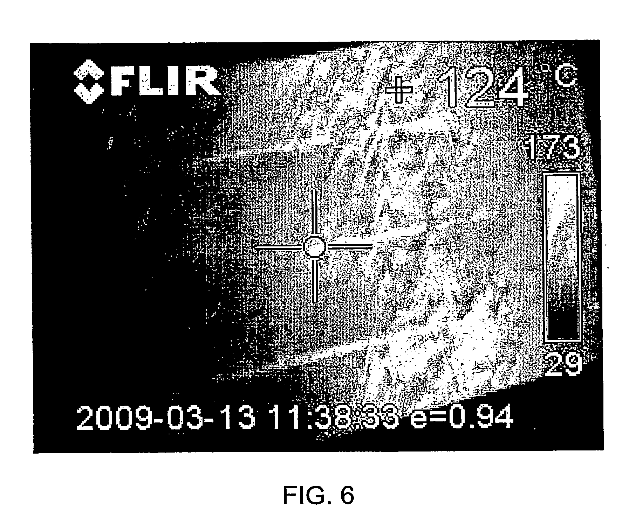

Tests have shown that when a current of 30A was flowing through the resistor device in fig. 2, the temperature near the notches 5 in the central area was 180 °C. However, the area along the periphery of the body 4, for example facing the MCB 20, was only 50 °C. Hence, even during such maximum current conditions, the temperature of the periphery was not sufficiently high to damage the plastic cover of the MCB. Fig. 6 is an image taken by a temperature sensing camera. Here it can be seen that the highest temperatures are near the second ends of the notches 5 (i.e. the end located within the central area), while the periphery are relatively cold.

It should be noted that in fig. 1 and during the tests, the body 4 was mounted vertically. Hence, favorable heat dissipation from the resistor device may be achieved.

In the embodiment shown in fig. 2, the metallic resistive material was titanium. In alternative embodiments, the metallic resistive material may be titanium alloy or stainless steel.

By choosing titanium it is provided that the resistor device has a relatively constant resistance even if its temperature changes.

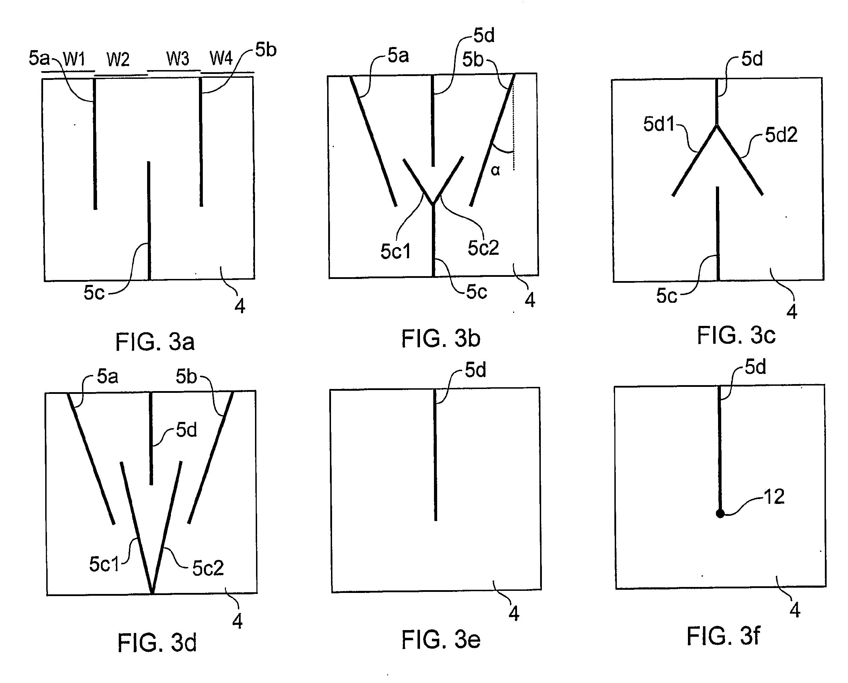

In fig. 2, the notches comprise three notches 5a, 5b and 5c. These three notches are vertical (i.e. parallel to height line H in fig. 2). Moreover, the notches are linear. The horizontal distance W1 between the first side 13 of the body 4 to the first notch 5a is equal to the horizontal distance W2 between the first and second notches 5a, 5b which again is equal to the horizontal distance W3 between the second and third notches 5b, 5c which again is equal to the horizontal distance W4 between the third notch 5c and the second side 14 of the body 4 (see fig. 3a). Hence, the above horizontal distances are W/4 which is 25 mm. The length L_{N} of each notch is larger than H/2 (equals 55mm), for example 65 mm. Consequently, the current flow line 6 is substantially W-shaped.

The first and second notch 5a, 5b are having their first end starting from the upper side of the body 4, while the first end of the third notch 5c are starting from the lower side of the body 4.

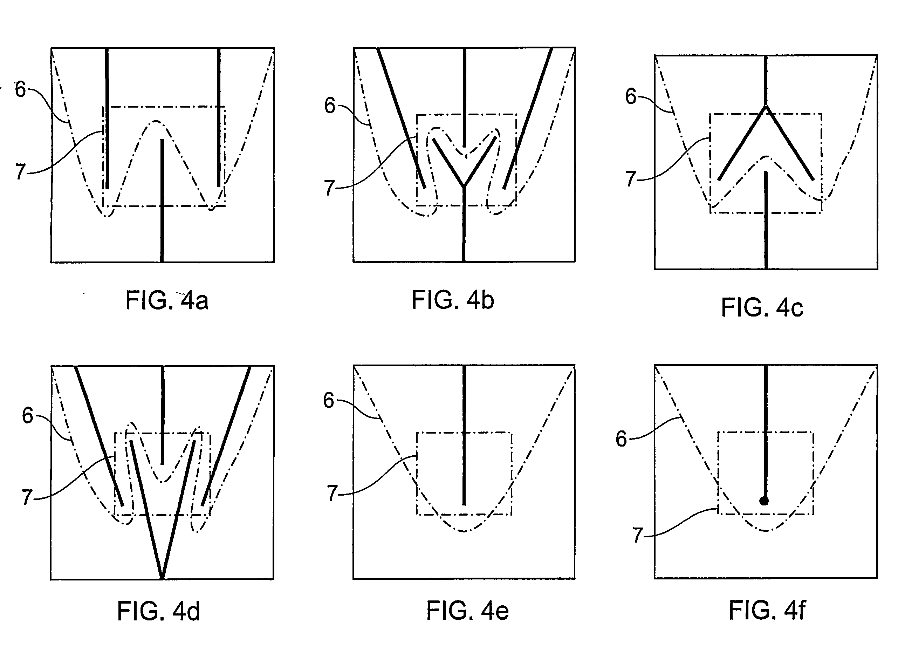

Fig. 3a and 4a are similar to fig. 2, and is only there for comparison with alternative embodiments of the invention.

### Second embodiment

It is now referred to fig. 3b and fig. 4b. Here, the first and second notches 5a, 5b are also starting from the upper side of the body, but they are not vertical. Each notch 5a, 5b may an angle α with respect to the vertical axis of ca 25 - 45°. In the embodiment shown in fig. 3b, the angle α is approximately 30°. As shown, the first and second notches 5a, 5b are directed towards the centre line/centre area of the body 4.

Moreover, the third notch 5c is starting in a vertical direction from the lower side of the body 4. The third notch 5c is divided into two branches 5c1 and 5c2, each facing substantially towards the first ends of notches 5a, 5b respectively.

Moreover, a fourth notch 5d is provided, starting vertically from the upper side of the body 4. The end of the fourth notch 5d is provided between the ends of the two branches 5c1 and 5c2.

Consequently, the current flow line 6 is here longer than the current flow line of fig. 4a. Moreover, it is shown that the central area 7 of fig. 4b is smaller than the central area 7 of fig. 4a.

### Third embodiment

It is now referred to fig. 3c and fig. 4c. Here, there are a first vertical, central notch 5c provided from the lower side of the body 4, extending approximately to the centre of the body 4. Moreover, there is a second vertical, central notch 5d provided from the upper side of the body 4. The second central notch 5d is divided into two branches 5d1 and 5d2 protruding on each side of the first central notch 5c.

Consequently, the current flow line 6 is substantially W-shaped.

### Fourth embodiment

It is now referred to fig. 3d and fig. 3d. Here, there are three notches 5a, 5b and 5d each substantially corresponding to notches 5a, 5b and 5d of the second embodiment.

Here, there is no vertical, common notch 5c for each of the branches 5c1, 5c2. Instead, the branches 5c1, 5c2 are meeting centrally at the lower end of the body 4.

### Fifth embodiment

It is now referred to fig. 3e and 4e. Here, the body 4 comprises only one notch, i.e. a vertical, central notch 5d protruding from the upper side of the body 4. The central, vertical notch 5d has a length corresponding to notch 5c of the first embodiment.

Here, the current flow line is substantially U-shaped.

### Sixth embodiment

It is now referred to fig. 3f and 4f. The sixth embodiment corresponds to the fifth embodiment above. Here, the second end of the notch 5 comprises a substantially circular recess 12.

There are several alternative embodiments than those mentioned above. A skilled person will understand that the dimensions and material of the body 4, together with the number of, the placement and the design of the notches can be varied to achieve the present invention as defined in the following claims.

For example may several of the notches of the first - fourth embodiments be provided with recesses 12. There would also be possible to divide a notch into more than two branches.

The present invention also relates to a method for providing a resistor device for connection between a miniature circuit breaker 20 and a bus bar 22. In a first step, the method comprises cutting a body 4 of a sheet of metallic resistive material. The next step is fixing an MCB connector 2 to the body 4 for connection to the miniature circuit breaker 20. Then again, the bus bar connector 3 is fixed to the body 4 for connection to the bus bar 22.

In a next step, at least one notch 5 is cut into the body, where the at least one notch is having a first end opening towards the periphery of the body 4 and a second end provided substantially in a central area 7 of the body 4; where the at least one notch defines a current flow line 6 between the MCB connector 2 and the bus bar connector 3; and where the total resistance between the MCB connector 2 and the bus bar connector 3 is approximately 28-32mΩ.

The cutting may be performed by water jet cutting or laser cutting.

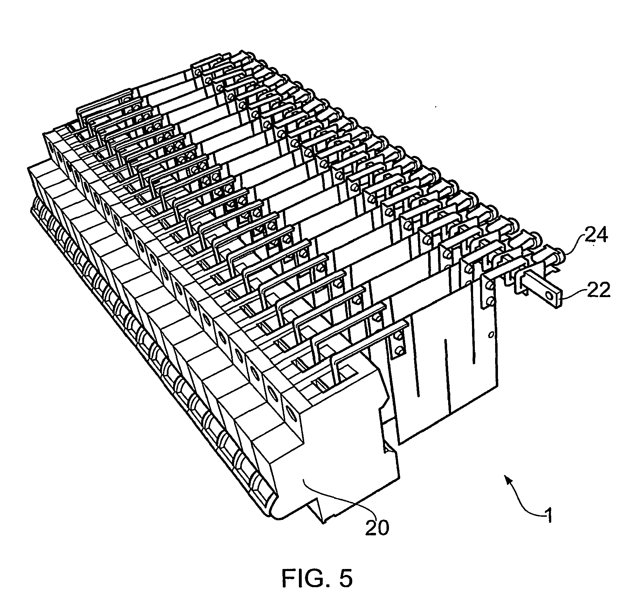

It is now referred to fig. 5, where a system for connection of miniature circuit breakers 20 to a bus bar 22 is provided. The system comprises several resistor devices 1 as described above, each connected between the respective miniature circuit breakers and the bus bar 22. The bodies 4 of the resistor devices 1 are provided in parallel.

By providing the bodies 4 of the resistor devices in parallel, an efficient cooling of all the resistors may be provided. A cooling fan may be provided for blowing air past the resistor devices 1 for further cooling.

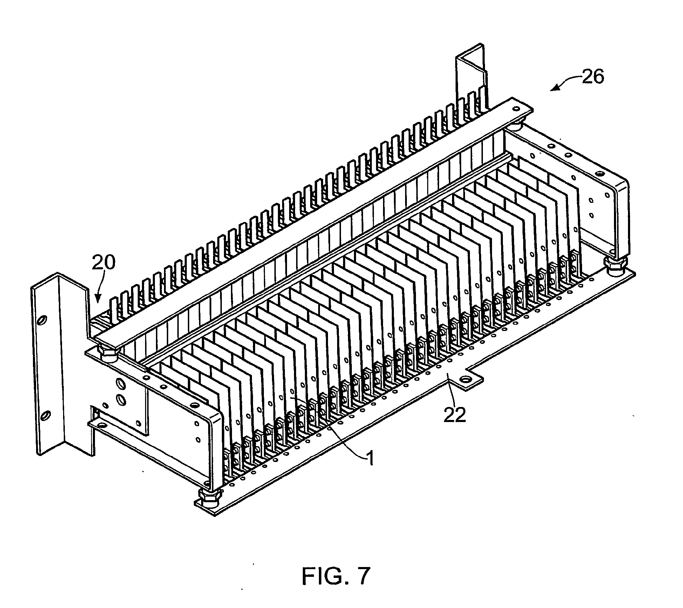

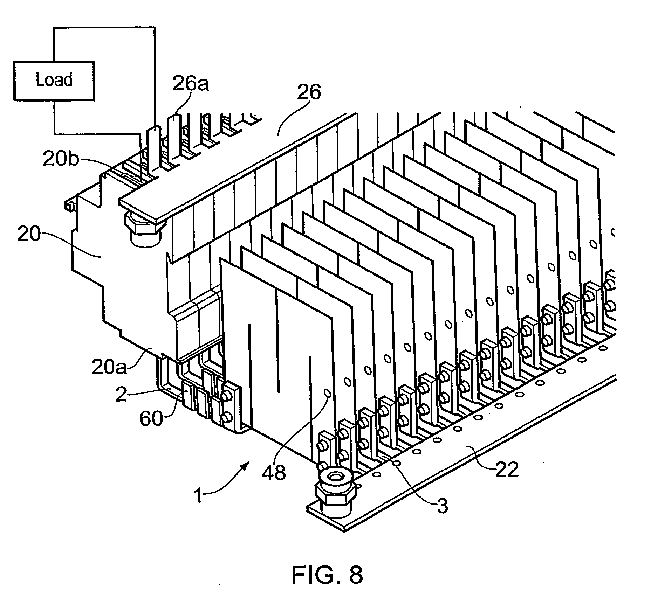

It is now referred to fig. 7 and 8, illustrating a load distribution system according to the invention. It should be noted that the system here is shown upside down when compared with fig. 5. The load distribution system may be provided in a cabinet together with a power supply system etc.

The load distribution system comprises the first bus bar 22 providing a first voltage level, i.e. -48V and the second bus bar 26 providing a second voltage level, i.e. ground. The first and second bus bars are connected to the DC output from the power supply system.

The miniature circuit breakers 20 are fixed next to each other, for example to a rail. Each of the MCBs 20 is having their first terminal 20a connected to the first bus bar 22 via a resistor device 1 as described above. Moreover, each of the MCBs 20 is having their second connection terminal 20b connected to the second bus bar 26 via a load. Also here, the bodies 4 of the respective resistor devices 1 are provided in parallel.

The bodies 4 of the resistor devices are flat, as described above. To avoid vibration, for example during transportation, or to prevent the resistor devices from being bent or loosened, which may cause them to come in contact with each other, the resistor devices may be provided with a mechanical support for supporting the resistor devices mechanically. The mechanical support may primarily be supporting the body 4 of the resistor device.

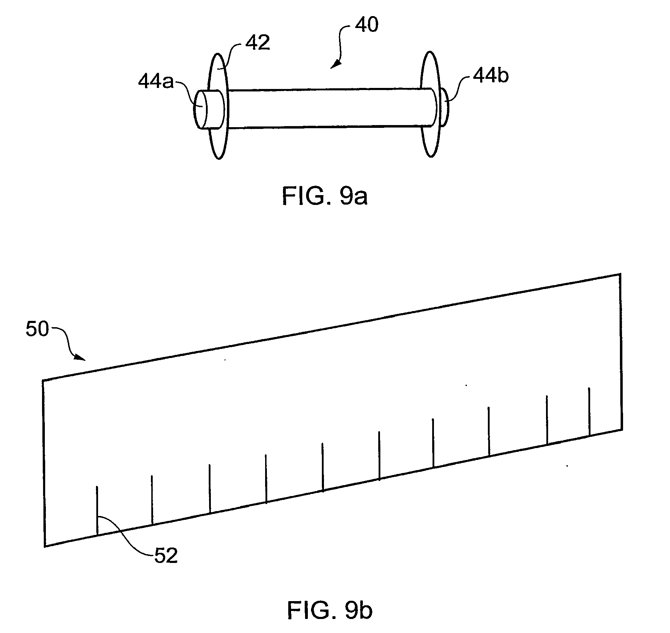

One example of such an support is shown in fig. 9a. Here the support is provided as a distance element 40, comprising a stopping collar 42 near each end 44 of the distance element. A first end 44a is adapted to be received in an opening 48 of a first resistor device, and a second end 44b is adapted to be received in a corresponding opening 48 of an adjacent resistor device. Hence, the collar 42 will prevent a sideways movement of the resistor device. In this embodiment, one or several such distance element may be provided between each resistor device and respective adjacent resistor devices. Hence, the length of the distance element should be adapted to the distance between each resistor device when mounted in the load distribution system..

A second example of an support is shown in fig. 9b. Here the support is provided as a plate element 50 comprising several spaced apart notches 52. The distance between each notch 52 is adapted to the distance between each resistor device when mounted in the load distribution system. When all resistor devices have been mounted between the bus bar and the MCB, the plate element 50 is inserted into notches 5c of the body 4, such that each body 4 is inserted into the respective notches 52.

The mechanical support should be made of an electric insulating and heat resistant material, for example a heat resistant plastic material, a ceramic material etc. Moreover, the mechanical support may be glued or fixed to the resistor device for further support.

Moreover, the MCB connector 2 may further comprise a cooling element. In fig. 8, it is shown that the MCB connector 2 comprises three cooling elements 60. The cooling elements 60 is provided as cooling flanges protruding from the MCB connector 2, in parallel with the body 4 of the resistor device.

It should also be noted that in fig. 8, an alternative bus bar connector 3 of the resistor device 1 is also used.

According to the above, a resistor device is provided as a single unit, which fulfills the requirements as mentioned in the introduction above. The resistor device may conduct high currents without being destroyed, it fits within the limited space, and heat is generated in a limited central area so that radiation of heat is not damaging the MCBs. The resistor devices are particularly suitable for dense mounting of several MCBs each connected to the bus bar by means of a resistor device.

## Claims

1. Resistor device connected between a miniature circuit breaker (20) and a bus bar (22), comprising:
- an miniature circuit breaker connector (2) connected to the miniature circuit breaker (20);
- a bus bar connector (3) connected to the bus bar (22);
**characterized in that** the resistor device further comprises:
- a body (4) fixed to the miniature circuit breaker connector (2) and the bus bar connector (3), where the body (4) comprises a sheet of a metallic resistive material;
where the body (4) comprises at least one notch (5) having a first end (15) opening towards the periphery of the body (4) and a second end (16) provided substantially in a central area (7) of the body (4); where the at least one notch defines a current flow line (6) between the miniature circuit breaker connector (2) and the bus bar connector (3), and where the total resistance between the miniature circuit breaker connector (2) and the bus bar connector (3) is approximately 20 - 40 mΩ.

2. Resistor device according to claim 1, where the central area (7) is defined to have the same shape as the body (4) and has an area less than 30% of the area of the body (4).

3. Resistor device according to claim 1 or 2, where the centre of the central area (7) coincides with the centre of the body (4).

4. Resistor device according to claim 1, where the metallic material of the body (4) has a low thermal conductivity.

5. Resistor device according to claim 1, where the body (4) is substantially rectangular.

6. Resistor device according to any of the claims above, where the metallic material is made of titanium, titanium alloy, or stainless steel.

7. Resistor device according to any of the claims above, where the body (4) is mounted vertically between the miniature circuit breaker (20) and the bus bar (22).

8. Resistor device according to claim 1, where the miniature circuit breaker connector (2) and the bus bar connector (3) are made of a material with resistance substantially equal to zero.

9. Resistor device according to claim 1, where the second end of the notch (5) comprises a substantially circular recess (12).

10. Resistor device according to claim 1, where the notch (5) comprises branches.

11. Resistor device according to claim 1, where the body (4) has a thickness less than 1.2 mm.

12. Resistor device according to claim 1, where the miniature circuit breaker connector (2) comprises a cooling element (60).

13. Method for providing a resistor device connected between a miniature circuit breaker (20) and a bus bar (22), comprising the following steps:
- cutting a body (4) of a sheet of metallic resistive material;
- fixing an miniature circuit breaker connector (2) to the body (4) and connecting the miniature circuit breaker connector (2) to the miniature circuit breaker (20);
- fixing a bus bar connector (3) to the body (4) and connecting the bus bar connector (3) to the bus bar (22);
- cutting at least one notch (5) into the body, where the at least one notch is having a first end opening towards the periphery of the body (4) and a second end provided substantially in a central area (7) of the body (4); where the at least one notch defines a current flow line (6) between the miniature circuit breaker connector (2) and the bus bar connector (3); and where the total resistance between the miniature circuit breaker connector (2) and the bus bar connector (3) is approximately 20 - 40 mΩ.

14. Method according to claim 13, where the cutting is performed by water jet cutting or laser cutting.

15. Load distribution system comprising:
- a first bus bar (22) providing a first voltage level;
- a second bus bar (26) providing a second voltage level;
- miniature circuit breakers (20), each having a first terminal connected to the first bus bar (22) via a resistor device (1) according to claim 1 and a second terminal connected to the second bus bar via a load, where bodies (4) of the respective resistor devices (1) are provided in parallel.

16. Load distribution system according to claim 15, where a cooling fan is provided for blowing air past the resistor devices (1).

17. Load distribution system according to claim 15, where the load distribution system further comprises a mechanical support between each resistor device (1) for supporting the resistor devices (1) mechanically.

## Patentansprüche

1. Widerstandsvorrichtung, das zwischen einem Miniaturschutzschalter (20) und einer Sammelschiene (22) verbunden ist, mit:
- einem Miniaturschutzschalteranschluss (2), der mit dem Miniaturschutzschalter (20) verbunden ist;
- einem Sammelschienenanschluss (3), der mit der Sammelschiene (22) verbunden ist;
**dadurch gekennzeichnet, dass** die Widerstandsvorrichtung ferner aufweist:
- einen Körper (4), der an dem Miniaturschutzschalteranschluss (2) und dem Sammelschienenanschluss (3) befestigt ist, wobei der Körper (4) eine Schicht aus metallischem Widerstandsmaterial aufweist;
wobei der Körper (4) mindestens eine Einkerbung (5) mit einem ersten Ende (15), das sich zum Umfang des Körpers (4) hin öffnet, und einem zweiten Ende (16), das im Wesentlichen in einem zentralen Bereich (7) des Körpers (4) vorgesehen ist, aufweist; wobei die mindestens eine Einkerbung eine Stromflusslinie (6) zwischen dem Miniaturschutzschalter (2) und dem Sammelschienenanschluss (3) definiert, und wobei der Gesamtwiderstand zwischen dem Miniaturschutzschalteranschluss (2) und dem Sammelschienenanschluss (3) ungefähr 20-40 mΩ beträgt.

2. Widerstandsvorrichtung nach Anspruch 1, wobei der zentrale Bereich (7) definiert ist, dieselbe Form wie der Körper (4) aufzuweisen, und eine Fläche von weniger als 30% der Fläche des Körpers (4) aufweist.

3. Widerstandsvorrichtung nach Anspruch 1 oder 2, wobei die Mitte des zentralen Bereichs (7) mit der Mitte des Körpers (4) übereinstimmt.

4. Widerstandsvorrichtung nach Anspruch 1, wobei das metallische Material des Körpers (4) eine niedrige thermische Leitfähigkeit aufweist.

5. Widerstandsvorrichtung nach Anspruch 1, wobei der Körper (4) im Wesentlichen rechteckig ausgebildet ist.

6. Widerstandsvorrichtung nach einem der vorstehenden Ansprüche, wobei das metallische Material aus Titan, einer Titanlegierung, oder Edelstahl hergestellt ist.

7. Widerstandsvorrichtung nach einem der vorstehenden Ansprüche, wobei der Körper (4) vertikal zwischen dem Miniaturschutzschalter (20) und der Sammelschiene (23) befestigt ist.

8. Widerstandsvorrichtung nach Anspruch 1, wobei der Miniaturschutzschalteranschluss (2) und der Sammelschienenanschluss (3) aus einem Material mit einem Widerstand, der im Wesentlichen Null beträgt, hergestellt sind.

9. Widerstandsvorrichtung nach Anspruch 1, wobei das zweite Ende der Einkerbung (5) eine im Wesentlichen kreisförmige Ausnehmung (12) aufweist.

10. Widerstandsvorrichtung nach Anspruch 1, wobei die Einkerbung (5) Abzweigungen aufweist.

11. Widerstandsvorrichtung nach Anspruch 1, wobei der Körper (4) eine Dicke von weniger als 1.2 mm aufweist.

12. Widerstandsvorrichtung nach Anspruch 1, wobei der Miniaturschutzschalteranschluss (2) ein Kühlelement (60) aufweist.

13. Verfahren zum Bereitstellen einer Widerstandsvorrichtung, die zwischen einem Miniaturschutzschalter (20) und einer Sammelschiene (22) verbunden ist, wobei das Verfahren die folgenden Schritte umfasst:
- Ausschneiden eines Körpers (4) aus einer Schicht aus metallischem Widerstandsmaterial;
- Befestigen eines Miniaturschutzschalteranschlusses (2) an dem Körper (4), und Verbinden des Miniaturschutzschalteranschlusses (2) mit dem Miniaturschutzschalter (20);
- Befestigen eines Sammelschienenanschlusses (3) an dem Körper (4), und Verbinden des Sammelschienenanschlusses (3) mit der Sammelschiene (22);
- Ausschneiden mindestens einer Einkerbung (5) in dem Körper, wobei die mindestens eine Einkerbung ein erstes Ende, das sich zum Umfang des Körpers (4) hin öffnet, und ein zweites Ende, das im Wesentlichen in einem zentralen Bereich (7) des Körpers (4) vorgesehen ist, aufweist; wobei die mindestens eine Einkerbung eine Stromflusslinie (6) zwischen dem Miniaturschutzschalteranschluss (2) und dem Sammelschienenanschluss (3) definiert; und wobei der Gesamtwiderstand zwischen dem Miniaturschutzschalteranschluss (2) und dem Sammelschienenanschluss (3) ungefähr 20-40 mΩ beträgt.

14. Verfahren nach Anspruch 13, wobei das Ausschneiden mittels Wasserstrahlschneiden oder Laserschneiden durchgeführt wird.

15. Lastverteilungssystem mit:
- einer ersten Sammelschiene (22) zum Bereitstellen eines ersten Spannungspegels;
- einer zweiten Sammelschiene (26) zum Bereitstellen eines zweiten Spannungspegels;
- Miniaturschutzschalter (20), die alle ein erstes Anschlusselement, das mit der ersten Sammelschiene (23) über ein Widerstandsvorrichtung (1) nach Anspruch 1 verbunden ist, und ein zweites Anschlusselement, das mit der zweiten Sammelschiene über eine Last verbunden ist, aufweisen, wobei Körper (4) der jeweiligen Widerstandsvorrichtungen (1) in paralleler Schaltung vorgesehen sind.

16. Lastverteilungssystem nach Anspruch 15, wobei ein Kühlgebläse, um Luft an den Widerstandsvorrichtungen (1) vorbeizublasen, vorgesehen ist.

17. Lastverteilungssystem nach Anspruch 15, wobei das Lastverteilungssystem ferner zwischen jedem Widerstandsvorrichtung (1) eine mechanische Stütze zum mechanischen Stützen der Widerstandsvorrichtung (1) aufweist.

## Revendications

1. Dispositif à résistance connecté entre un disjoncteur miniature (20) et une barre omnibus (22), comprenant :
- un connecteur de disjoncteur miniature (2) connecté au disjoncteur miniature (20) ;
- un connecteur de barre omnibus (3) connecté à la barre omnibus (22) ;
**caractérisé en ce que** le dispositif à résistance comprend en outre :
- un corps (4) fixé au connecteur de disjoncteur miniature (2) et au connecteur de barre omnibus (3), où le corps (4) comprend une feuille d'un matériau métallique résistif ;
où le corps (4) comprend au moins une encoche (5) ayant une première extrémité (15) s'ouvrant vers la périphérie du corps (4) et une deuxième extrémité (16) prévue sensiblement dans une zone centrale (7) du corps (4) ; où ladite au moins une encoche définit une ligne de circulation de courant (6) entre le connecteur de disjoncteur miniature (2) et le connecteur de barre omnibus (3), et où la résistance totale entre le connecteur de disjoncteur miniature (2) et le connecteur de barre omnibus (3) est approximativement de 20 à 40 mΩ.

2. Dispositif à résistance selon la revendication 1, où la zone centrale (7) est définie pour avoir la même forme que le corps (4) et a une aire inférieure à 30 % de l'aire du corps (4).

3. Dispositif à résistance selon la revendication 1 ou 2, où le centre de la zone centrale (7) coïncide avec le centre du corps (4).

4. Dispositif à résistance selon la revendication 1, où le matériau métallique du corps (4) a une faible conductivité thermique.

5. Dispositif à résistance selon la revendication 1, où le corps (4) est sensiblement rectangulaire.

6. Dispositif à résistance selon l'une quelconque des revendications ci-dessus, où le matériau métallique est constitué de titane, d'un alliage de titane, ou d'acier inoxydable.

7. Dispositif à résistance selon l'une quelconque des revendications ci-dessus, où le corps (4) est monté verticalement entre le disjoncteur miniature (20) et la barre omnibus (22).

8. Dispositif à résistance selon la revendication 1, où le connecteur de disjoncteur miniature (2) et le connecteur de barre omnibus (3) sont constitués d'un matériau avec une résistance sensiblement égale à zéro.

9. Dispositif à résistance selon la revendication 1, où la deuxième extrémité de l'encoche (5) comprend un évidement (12) sensiblement circulaire.

10. Dispositif à résistance selon la revendication 1, où l'encoche (5) comprend des branches.

11. Dispositif à résistance selon la revendication 1, où le corps (4) a une épaisseur inférieure à 1,2 mm.

12. Dispositif à résistance selon la revendication 1, où le connecteur de disjoncteur miniature (2) comprend un élément de refroidissement (60).

13. Procédé de réalisation d'un dispositif à résistance connecté entre un disjoncteur miniature (20) et une barre omnibus (22), comprenant les étapes suivantes :
- de découpe d'un corps (4) d'une feuille de matériau métallique résistif ;
- de fixation d'un connecteur de disjoncteur miniature (2) au corps (4) et de connexion du connecteur de disjoncteur miniature (2) au disjoncteur miniature (20) ;
- de fixation d'un connecteur de barre omnibus (3) au corps (4) et de connexion du connecteur de barre omnibus (3) à la barre omnibus (22) ;
- de découpe d'au moins une encoche (5) dans le corps, où ladite au moins une encoche a une première extrémité s'ouvrant vers la périphérie du corps (4) et une deuxième extrémité prévue sensiblement dans une zone centrale (7) du corps (4) ; où ladite au moins une encoche définit une ligne de circulation de courant (6) entre le connecteur de disjoncteur miniature (2) et le connecteur de barre omnibus (3) ; et où la résistance totale entre le connecteur de disjoncteur miniature (2) et le connecteur de barre omnibus (3) est approximativement de 20 à 40 mΩ.

14. Procédé selon la revendication 13, où la découpe est effectuée par découpe par jet d'eau ou par découpe au laser.

15. Système de distribution de charge comprenant :
- une première barre omnibus (22) fournissant un premier niveau de tension ;
- une deuxième barre omnibus (26) fournissant un deuxième niveau de tension ;
- des disjoncteurs miniatures (20), chacun ayant une première borne connectée à la première barre omnibus (22) par l'intermédiaire d'un dispositif à résistance (1) selon la revendication 1 et une deuxième borne connectée à la deuxième barre omnibus par l'intermédiaire d'une charge, où les corps (4) des dispositifs à résistance (1) respectifs sont prévus en parallèle.

16. Système de distribution de charge selon la revendication 15, où un ventilateur de refroidissement est prévu pour souffler de l'air devant les dispositifs à résistance (1).

17. Système de distribution de charge selon la revendication 15, où le système de distribution de charge comprend en outre un support mécanique entre chacun des dispositifs à résistance (1) pour supporter les dispositifs à résistance (1) mécaniquement.
